Europäisches Patentamt

European Patent Office

Office européen des brevets

(19)

(11) EP 0 739 307 B1

(12) EUROPÄISCHE PATENTSCHRIFT

(45) Veröffentlichungstag und Bekanntmachung des Hinweises auf die Patenterteilung:
25.03.1998 Patentblatt 1998/13

(21) Anmeldenummer: 95904499.1

(22) Anmeldetag: 17.12.1994

(51) Int Cl.⁶: C01B 15/10, C01B 15/00, C11D 3/39, C11D 17/00

(86) Internationale Anmeldenummer:
PCT/EP94/04207

(87) Internationale Veröffentlichungsnummer:
WO 95/18064 (06.07.1995 Gazette 1995/29)

(54) BESCHICHTETE ALKALIMETALLPEROXOSALZE UND VERFAHREN ZU DEREN HERSTELLUNG

COATED ALKALI METAL PEROXO SALTS AND PROCESS FOR PRODUCING THE SAME

SELS PEROXO DE METAUX ALCALINS ENROBES ET LEUR PROCEDE DE PRODUCTION

(84) Benannte Vertragsstaaten:
AT BE CH DE DK ES FR GB GR IE IT LI LU NL PT SE

(30) Priorität: 29.12.1993 DE 4344831
07.10.1994 DE 4435817

(43) Veröffentlichungstag der Anmeldung:
30.10.1996 Patentblatt 1996/44

(73) Patentinhaber: Solvay Interox GmbH
D-30625 Hannover (DE)

(72) Erfinder:
• HONIG, Helmut
  D-82538 Geretsried (DE)
• DÖTSCH, Werner
  D-53557 Bad Hönningen (DE)
• MATHES, Manfred
  D-53557 Bad Hönningen (DE)
• GERLING, Klaus-Günter
  D-30880 Laatzen (DE)
• HECKEN, Gerd
  D-53560 Vettelschoss (DE)

(74) Vertreter: Gosmann, Martin
Solvay Pharmaceuticals GmbH
Hans-Böckler-Allee 20
30173 Hannover (DE)

(56) Entgegenhaltungen:
EP-A- 0 395 970          EP-A- 0 407 189
EP-A- 0 546 815          WO-A-92/17400

**Beschreibung**

Die Erfindung betrifft die Verwendung von Lactobionsäure, Lactobionsäuresalzen und/oder Lactobionsäurederivaten als Hüllmaterial für die Beschichtung von teilchenförmigen Alkalimetallperoxosalzen, ein Verfahren zur Herstellung von beschichteten, teilchenförmigen Alkalimetallperoxosalzen, bei dem Lactobionsäure, ein Lactobionsäuresalz und/oder ein Lactobionsäurederivat als Hüllmaterial für die Beschichtung der Alkalimetallperoxosalz-Teilchen eingesetzt wird, sowie weiterhin die durch das vorstehende Verfahren erhaltenen beschichteten, teilchenförmigen Alkalimetallperoxosalze und deren Anwendung.

Es ist bekannt, Peroxoverbindungen in pulverförmigen Waschmittelmischungen als bleichende Verbindungen einzusetzen. In den üblichen Haushaltsvollwaschmitteln verwendet man üblicherweise Natriumperborat-Tetrahydrat oder Natriumperborat-Monohydrat als Bleichmittel, da diese Materialien in reinem Waschmittelmedium relativ beständig gegen Zersetzung sind. Immer häufiger wird jedoch auch auf andere Alkalimetallperoxosalze, insbesondere Peroxocarbonat (Percarbonat), zurückgegriffen. Diese Alkalimetallperoxosalze, insbesondere das Percarbonat, sind zwar in reinem, trockenem Zustand beständig, jedoch weisen sie den Nachteil auf, sich in Gegenwart von Feuchtigkeit unter Verlust von Aktivsauerstoff leicht zu zersetzen, was nachfolgend am Beispiel des Percarbonates, insbesondere des Natriumpercarbonates (PCS) näher erläutert werden soll.

Die vorstehenden Nachteile sind insbesondere darauf zurückzuführen, daß Percarbonat nie ganz trocken sein kann, da neben dem Restwasser aus dem Herstellungsprozeß immer auch Wasser durch Zersetzung von Wasserstoffperoxid im PCS selbst gebildet wird. Bei der Herstellung von PCS aus Lösungen (Naßprozeß) ist auch zu berücksichtigen, daß nicht eine wohldefinierte, homogene Verbindung, sondern ein Gemisch von teilweise Hydratwasserhaltigen Verbindungen mit u.a. folgenden Formeln entsteht:

$$Na_2CO_3 \cdot 1{,}5\ H_2O_2$$

$$Na_2CO_3 \cdot 1{,}5\ H_2O_2 \cdot H_2O$$

$$Na_2CO_3 \cdot 2\ H_2O_2 \cdot H_2O$$

$$Na_2CO_3 \cdot 2\ H_2O_2$$

$$Na_2CO_3 \cdot x\ H_2O_2$$

Die für die Stabilität des PCS schädliche Feuchtigkeit stammt also nicht nur aus dem Basispulver, durch welches zwar über die Einzelkomponenten wie z.B. Zeolith, Carboxymethylzellulose, Soda, optische Aufheller etc. ein wesentlicher Teil der Feuchtigkeit in die Waschmittelzusammensetzungen eingebracht wird, sondern ein Teil der schädlichen Feuchtigkeit entstammt somit auch dem Percarbonat selbst. Eine optimale Hüllschicht für Alkalimetallperoxosalze, insbesondere für Percarbonat, sollte daher nicht nur die von außen auf das Percarbonat-Teilchen einwirkende Feuchtigkeit abhalten, sondern sie sollte gleichzeitig in der Lage sein, das Percarbonat auch gegen das aus dem Percarbonat selbst entstammende Kristallwasser und/oder die Zersetzungsfeuchtigkeit ausreichend zu schützen. Ferner sollte die für die Beschichtung der PCS-Teilchen verwendeten Hüllmaterialien die Lösegeschwindigkeit des Percarbonates möglichst nicht beeinträchtigen. Neben der Beschichtungs- und Schutzfunktion sollten die verwendeten Hüllmaterialien auch zusätzliche Funktionen in anwendungsfertigen Zusammensetzungen, die das beschichtete Alkalimetallperoxosalz enthalten, übernehmen können.

Zur Stabilisierung von Alkalimetallperoxosalzen wurde im Stand der Technik bisher vorgeschlagen, die Alkalimetallperoxosalze z.B. mit anorganischen stabilisierenden Materialien oder mineralischen Schutzfilmen zu umhüllen.

Beispielsweise beschreiben die deutschen Offenlegungsschriften 33 21 082 und 33 48 394 zur Umhüllung von Percarbonat die Verwendung von Borat als Beschichtungsmittel, welches gegebenenfalls zusätzlich ein Alkalimetallsilikat enthalten kann. Ein ähnliches Beschichtungsmaterial aus verschiedenen Borsäuren, die gegebenenfalls ebenfalls Alkalimetallsilikat enthalten können, wird in der deutschen Offenlegungsschrift 28 00 916 beschrieben. Weiterhin werden im Stand der Technik Mineralsalze als Beschichtungsmaterialien empfohlen. So beschreibt die deutsche Offenlegungsschrift 29 15 980 das Umhüllen von Natriumpercarbonat mit Erdalkalimetallsalzen, die aus einer wäßrigen Lösung auf die Natriumpercarbonat-Partikel aufgebracht werden. Ferner beschreiben die deutschen Patente 24 17 572 und 26 22 610 die Stabilisierung von Alkalimetallperoxosalzen durch Umhüllen mit einem mineralischen Schutzfilm aus Natriumcarbonat mit anderen Mineralsalzen, insbesondere mit Natriumsulfat; gemäß dem deutschen Patent 26 22 610 kann diese mineralische Hüllschicht zusätzlich Natriumsilikat enthalten.

Die vorstehenden anorganischen oder mineralischen Beschichtungsmaterialien des Standes der Technik bieten zwar bereits eine Verbesserung der Stabilität von Alkalimetallperoxosalzen, jedoch werden die bestehenden Probleme, insbesondere im Hinblick auf Natriumpercarbonat, durch diese im Stand der Technik vorgeschlagenen Beschichtungsmaterialien noch nicht in wünschenswerter Weise gelöst.

Aus der europäischen Patentanmeldung EP 407 189 ist der Einsatz von Mono- und Dicarbonsäuren zur Stabilisierung von PCS (Natriumpercarbonat) bekannt. Zur wirksamen Stabilisierung des Natriumpercarbonates muß die Mono- oder Dicarbonsäure jedoch mit einer Verbindung aus der Gruppe der Sulfate, Nitrate oder Silikate (als Alkalimetall- oder Erdalkalimetallsalze) zwingend in das Natriumpercarbonat inkorporiert werden. Bei den Mono- und Dicarbonsäuren der EP 407 189 handelt es sich insbesondere um gewöhnliche aliphatische, alicyclische oder aromatische Mono- oder Dicarbonsäuren mit 4 bis 20 Kohlenstoffatomen. Hinweise auf das im Rahmen der hier vorliegenden Erfindung verwendete Coating-Material finden sich in der europäischen Patentanmeldung EP 407 189 jedoch nicht.

Das im Rahmen der vorliegenden Erfindung verwendete Coating-Material wird in der europäischen Patentanmeldung EP 395 970 als Wasch- und Reinigungsmittelinhaltsstoff beschrieben. In der EP 395 970 wird Lactobionsäure als biologisch abbaubarer und ökologisch verträglicher Waschmittelbuilder beschrieben. Hinweise auf den stabilisierenden Einfluß von Lactobionsäure und/oder Lactobionsäuresalzen auf Natriumpercarbonat oder dessen Eignung als Coating-Material für Alkalimetallperoxosalze finden sich dagegen in der europäischen Patentanmeldung EP 395 970 nicht.

Es bestand daher die Aufgabe, ein neues Hüllmaterial für teilchenförmige Peroxoverbindungen zu finden, das die weiter oben stehenden Anforderungen möglichst weitgehend erfüllt und durch welches den damit beschichteten Teilchen bei längerer Lagerung und insbesondere bei Lagerung in Gegenwart von anderen Waschmittelinhaltsstoffen eine erhöhte Stabilität verliehen wird.

Die Aufgabe wird gelöst durch das in den Patentansprüchen definierte, teilchenförmige Alkalimetallperoxosalz, das mit einer ein organisches Hüllmaterial enthaltenden Hüllschicht beschichtet ist; weiterhin wird die Aufgabe gelöst durch das Verfahren zur Herstellung der erfindungsgemäß beschichteten, teilchenförmigen Alkalimetallperoxosalze und die angegebene Verwendung.

Insbesondere schlägt die Erfindung die Verwendung von Lactobionsäure, Lactobionsäuresalzen und/oder Lactobionsäurederivaten als Hüllmaterial für die Beschichtung von Alkalimetallperoxosalzen, wie insbesondere solche aus der Gruppe Peroxocarbonat, Peroxopyrophosphat, Peroxotripolyphosphat und/oder Peroxomonosulfat, vor; außer den vorgenannten Peroxosalzen kommen auch andere ansich im Stand der Technik bekannte Persalze, z.B. Perborate, anorganische Peroxide etc. im Zusammenhang mit der erfindungsgemäßen Verwendung in Frage. Vorzugsweise wird die Verwendung von Lactobionsäure, Lactobionsäuresalzen und/oder Lactobionsäurederivaten jedoch für die Beschichtung von Natriumpercarbonat vorgeschlagen. Eine Variante der Erfindung schlägt vor, die Lactobionsäure und/oder das Lactobionsäuresalz in Kombination, vorzugsweise im Gemisch, mit Borsäure und/oder Borsäuresalz für die Beschichtung von Alkalimetallperoxosalzen, vorzugsweise von Natriumpercarbonat (PCS), zu verwenden. In einer weiteren Variante der Erfindung wird die Verwendung von Lactobionsäure, Lactobionsäuresalzen und/oder Lactobionsäurederivaten als Hüllmaterial in Kombination, vorzugsweise im Gemisch, mit einem Mineralsalzgemisch aus Alkalimetallsulfat und Alkalimetallchlorid als weiterem Hüllmaterial für die Beschichtung von Alkalimetallperoxosalzen, vorzugsweise von Natriumpercarbonat, vorgeschlagen.

Lactobionsäure ist die 4-(beta-D-Galactosido)-D-gluconsäure und als solche bekannt; sie kann beispielsweise durch Oxidation von Lactose gewonnen werden. Salze der Lactobionsäure sind hier wasserlösliche Salze mit Kationen aus der Gruppe der Alkali- und Erdalkalimetalle, vorzugsweise der Alkalimetalle. Ein geeignetes Erdalkalimetall ist das Calcium; bevorzugte Lactobionsäuresalze sind insbesondere die nicht härtebildenden Natrium- und Kaliumlactobionate. Lactobionsäurederivate im Sinne der Erfindung sind z.B. Lactobionsäureamide oder Lactobionsäureester. Lactobionsäureamide sind solche Amide der Lactobionsäure mit unverzweigten, gesättigten oder ungesättigten, primären Alkylaminen mit bis zu 22 C-Atomen. Zweckmäßig sind z.B. Fettsäureamide der Lactobionsäure, deren Aminreste 8 bis 22 C-Atome in geraden Ketten aufweisen; bevorzugt sind hierbei Amide aus Aminen mit Kettenlängen von 14 bis 18 C-Atomen, die auch als Gemisch miteinander vorliegen können, z.B. wie in einem aus einem natürlich vorkommenden Fettsäuregemisch gewonnenes Fettsäureamingemisch. Lactobionsäureester sind solche Ester der Lactobionsäure mit unverzweigten, gesättigten oder ungesättigten, primären Alkanolen mit bis zu 22 C-Atomen. Zweckmäßig sind z.B. Lactobionsäureester, die mit primären Alkanolen mit 8 bis zu 22 C-Atomen in geraden Ketten gebildet sind und wobei sich diese Alkanole von den entsprechenden Fettsäuren durch Reduktion ableiten. Beispiele für die den Lactobionsäureamiden bzw. -estern zugrundeliegenden Fettsäuren sind Caprylsäure, Caprinsäure, Laurinsäure, Myristinsäure, Palmitinsäure, Stearinsäure, Arachinsäure und Behensäure; Beispiele für ungesättigte Fettsäuren sind Palmitolein-, Öl-, Linol- und Linolensäure; natürlich vorkommende Fettsäuregemische sind z.B. Kokosfettsäure und Talgfettsäure. Die Lactobionsäureamide bzw. -ester sind bekannt und käuflich bzw. lassen sich durch Amidierung bzw. Veresterung der Lactobionsäure nach an sich bekannten Verfahren gewinnen. Lactobionsäure bzw. deren Salze sind für ihre Builder- bzw. Cobuildereigenschaften für Wasch- und Reinigungszusammensetzungen bereits beschrieben; die Verwendung als Hüllmaterial für die Beschichtung von Persalzen ist dagegen neu, insbesondere in Kombination mit Borsäure bzw. Borsäuresalz oder in Kombination mit dem Mineralsalzgemisch aus Alkalimetallsulfat und Alkalimetallchlorid (im folgenden auch kurz Alkalimetallsulfatchlorid genannt).

Das erfindungsgemäß beschichtete, teilchenförmige Alkalimetallperoxosalz besteht aus einem Kern, der im wesentlichen aus einem Alkalimetallperoxosalz, insbesondere aus der Gruppe Peroxocarbonat (Percarbonat), Peroxopyrophosphat, Peroxotripolyphosphat und/oder Peroxomonosulfat, besteht, und aus einer den Kern umgebenden Hüllschicht, die als Hüllmaterial einen wesentlichen Anteil an Lactobionsäure, Lactobionsäuresalz und/oder einem Lactobionsäurederivat enthält; gegebenenfalls kann die Hüllschicht daneben auch einen gewissen Anteil an anderen üblichen Hüllmaterialien und/oder an bei der Alkalimetallperoxosalz-Herstellung üblichen Hilfsstoffen enthalten. Ein bevorzugtes, erfindungsgemäß beschichtetes teilchenförmiges Alkalimetallperoxosalz ist das Peroxocarbonat, insbesondere das Natriumpercarbonat.

In einer zweckmäßigen Variante der Erfindung zeichnet sich das beschichtete, teilchenförmige Alkalimetallperoxosalz dadurch aus, daß die Hüllschicht Lactobionsäure, ein Lactobionsäuresalz und/oder ein Lactobionsäurederivat in einer Gesamtmenge von wenigstens 50 Gew.-% (bezogen auf die Hüllschicht) enthält. Vorzugsweise beträgt die Menge an Lactobionsäure, Lactobionsäuresalz und/oder Lactobionsäurederivat in der Hüllschicht wenigstens 60 Gew.-%, insbesondere wenigstens 75 Gew.-%.

Die vorstehenden, erfindungsgemäßen Teilchen sind durch die Lactobionsäure, Lactobionsäuresalz und/oder Lactobionsäurederivat enthaltende Hüllschicht (im folgenden auch LBA-Hüllschicht genannt) überraschend gut stabilisiert. Dieses erfindungsgemäße Ergebnis überrascht umsomehr, da es sich um eine Hüllschicht handelt, die einen wesentlichen Anteil an einem organischen Hüllmaterial enthält, ohne daß hierbei Probleme in bezug auf die Oxidationsbeständigkeit dieses organischen Hüllmaterials auftreten. Durch die erfindungsgemäße LBA-Hüllschicht ist das Alkalimetallperoxosalz-Teilchen sowohl gegen die von außen auf das Alkalimetallperoxosalz-Teilchen einwirkende Feuchtigkeit (beispielsweise aus Waschmittelkomponenten) als auch gegen aus dem Inneren des Alkalimetallperoxosalz-Teilchens selbst entstammendes Wasser sehr vorteilhaft geschützt. Ein besonderer Vorteil der Erfindung besteht auch darin, daß das im Alkalimetallperoxosalz noch frei bewegliche Wasser während der Lagerung durch die LBA-Hüllschicht gemäß der Erfindung sehr gut abgefangen werden kann; somit wird die ansonsten unter Aktivsauerstoff-Verlust und Wasserbildung ablaufende und die Produktqualität beeinträchtigende Zersetzung von Wasserstoffperoxid aus dem Peroxosalz wirkungsvoll unterbunden.

Ein weiterer überraschender Vorteil besteht darin, daß die Wasserlöslichkeit und die Lösegeschwindigkeit der Alkalimetallperoxosalze durch die erfindungsgemäße Beschichtung nicht vermindert werden. Die erfindungsgemäßen, umhüllten Alkalimetallperoxosalz-Teilchen weisen daher günstige anwendungstechnische Eigenschaften auf, die bei Anwendung feuchtigkeitsabweisender Beschichtungsmaterialien des Standes der Technik nicht immer in dieser Weise erreicht werden.

Die Vorteile der Erfindung kommen besonders gut zur Geltung, wenn die Hüllschicht die Lactobionsäure und/oder das Lactobionsäuresalz in Kombination, vorzugsweise im Gemisch, mit Borsäure und/oder einem Borsäuresalz als weiterem Hüllmaterial enthält. Eine zweckmäßige Ausgestaltung dieser Erfindungsvariante besitzt eine Hüllschicht, in der das Molverhältnis von einerseits der Lactobionsäure und/oder des Lactobionsäuresalzes zu andererseits der Borsäure und/oder dem Borsäuresalz 10:1 bis 1:3, vorzugsweise 6:1 bis 1:1,5 bezogen auf Bor, beträgt; insbesondere beträgt das Molverhältnis etwa 1:1, d.h. 1,1:1 bis 1:1,1. Hierbei sind insbesondere solche beschichteten, teilchenförmigen Alkalimetallperoxosalze vorteilhaft, in denen die Kombination, vorzugsweise das Gemisch, aus dem Hüllmaterial Lactobionsäure und/oder Lactobionsäuresalz und dem weiteren Hüllmaterial Borsäure und/oder Borsäuresalz wenigstens 80 Gew.-%, vorzugsweise wenigstens 90 Gew.-%, des Beschichtungsmaterials beträgt. Bei der vorstehenden Kombination der Hüllmaterialien aus einerseits Lactobionsäure bzw. Lactobionsäuresalz und/oder andererseits Borsäure und/oder Borsäuresalz können die Hüllmaterialien aus den beiden genannten Gruppen bspw. auch in verschiedenen Hüllschichten enthalten sein; z.B. kann das PCS zunächst mit einer inneren Hüllschicht aus Borsäure- bzw. Borsäuresalzenthaltender Beschichtung versehen sein, woran sich eine zweite, äußere Beschichtung mit Lactobionsäure bzw. Lactobionsäuresalz anschließt. Bevorzugt liegen aber bei dieser Erfindungsvariante die Hüllmaterialien aus den beiden genannten Gruppe gemeinsam in einer Hüllschicht kombiniert, d.h. im Gemisch miteinander, vor.

Als Borsäure kann hierbei sowohl Ortho- ($H_3BO_3$) als auch Metaborsäure ($HBO_2$) eingesetzt werden. Als Borsäuresalz sind anorganische Borate geeignet, die sich von Ortho- bzw. Metaborsäure formelmäßig ableiten bzw. auf die wasserärmeren Polyborsäuren der allgemeinen Formel $H_{n-2}B_nO_{2n-1}$ zurückgeführt werden können. Insbesondere handelt es sich bei den erfindungsgemäß verwendeten Borsalzen um Bormineralien wie Ortho- und Metaborat, vorzugsweise um Alkaliborate; zweckmäßig ist z.B. Borax, beispielsweise als Penta- oder Dekahydrat. In einfacher Weise kann man andererseits auch die teilweise und vollständige Salzbildung sowohl bei Lactobionsäure als auch bei den Borsäuren bei der Herstellung von Beschichtungsmittel-Lösungen durch Zugabe von Hydroxiden oder Oxiden der Alkali- bzw. Erdalkalimetalle zu wäßrigen Lösungen von Lactobionsäure und/oder von Borsäuren bewirken.

In einer weiteren Variante der Erfindung kommen die Vorteile der Erfindung ebenfalls besonders gut zur Geltung, wenn die Hüllschicht die Lactobionsäure, das Lactobionsäuresalz und/oder das Lactobionsäurederivat in Kombination, vorzugsweise im Gemisch, mit einem anorganischen Mineralsalzgemisch aus Alkalimetallsulfat und Alkalimetallchlorid als weiterem Hüllmaterial enthält. In bevorzugten, erfindungsgemäß umhüllten teilchenförmigen Alkalimetallperoxosalzen ist das Alkalimetall des Sufates oder Chlorides im Hüllmaterial Natrium oder Kalium; in dieser Ausgestaltung der Erfindung enthält somit die Hüllschicht neben Lactobionsäure, Lactobionsäuresalz und/oder Lactobionsäurederivat als weitere Komponente ein Mineralsalzgemisch, welches durch gemeinsame Kristallisation von einerseits Natrium- oder Kaliumsulfat mit andererseits Natrium- oder Kaliumchlorid während des Beschichtungsvorganges gebildet wird. Besonders bevorzugt werden Lactobionsäuresalze, insbesondere Natriumlactobionat, mit dem Alkalimetallsulfatchlorid kombiniert. Die vorstehenden, erfindungsgemäßen Teilchen sind durch die kombinierte Hüllschicht aus einerseits Lactobionsäure, Lactobionsäuresalz und/oder Lactobionssäurederivat und dem Alkalimetallsulfat/Alkalimetallchlorid-Mineralsalzgemisch (im folgenden auch LBA/Sulfatchlorid-Hüllschicht genannt) überraschend gut stabilisiert. Ein besonderer Vorteil dieser Variante der Erfindung besteht in Bezug auf die Lagerfähigkeit und Lagerstabilität der beschichteten Alkaliperoxosalze darin, daß nicht nur Wasser, sondern auch im Alkalimetallperoxosalz enthaltenes, frei bewegliches Wasserstoffperoxid durch die erfindungsgemäße LBA/Sulfatchlorid-Hüllschicht sehr gut abgefangen werden kann. Daher kann auch die ansonsten unter Aktivsauerstoff-Verlust und Wasserbildung ablaufende und die Produktqualität beeinträchtigende Zersetzung von Wasserstoffperoxid im Peroxosalz besonders wirkungsvoll unterbunden werden, da die stabilisierende Wirkung des LBA-Anteils in der Hüllschicht durch den Anteil an Alkalimetallsulfatchlorid zusätzlich unterstützt wird.

Das vorstehende erfindungsgemäße Ergebnis überrascht auch, da es sich beim Alkalimetallsulfatchlorid um eine Hüllschichtkomponente aus einfachen anorganischen Alkalimetallsalzen handelt, deren Einzelbestandteile für sich, d. h. das Alkalimetallsulfat oder das Alkalimetallchlorid, keine derartige stabilisierende Wirkung aufweisen. Ohne eine bestimmte Theorie festlegen oder eine einschränkende Erläuterung der Erfindung vorzunehmen, besteht eine mögliche Deutung der stabilisierenden Wirkung der erfindungsgemäßen Hüllschichtkomponente aus Alkalimetallsulfatchlorid darin, daß das Alkalimetallsulfatchlorid grundsätzlich zur Clathratbildung befähigt ist. Durch das Alkalimetallsulfatchlorid wird unter Bildung des Clathrates sowohl von außen auf das Alkalimetallperoxosalz-Teichen einwirkende Feuchtigkeit (beispielsweise aus Waschmittelkomponenten) als auch aus dem Inneren des Alkalimetallperoxosalz-Teilchens selbst entstammendes Kristallwasser sowie Wasserstoffperoxid durch den Einbau auf Kristallgitterplätze des Clathrates sehr fest, insbesondere fester als gewöhnliches Kristallwasser, gebunden. Ein besonderer Vorteil der Clathratbildung besteht somit darin, daß auch das sich während der Lagerung teilweise aus dem Alkalimetallperoxosalz freisetztende Wasserstoffperoxid durch die Alkalimetallsulfatchlorid-Hüllschicht gemäß der Erfindung sehr gut abgefangen und fest gebunden werden kann. Somit wird die ansonsten unter Aktivsauerstoff-Verlust und Wasserbildung ablaufende und die Produktqualität beeinträchtigende Zersetzung von Wasserstoffperoxid aus dem Peroxosalz wirkungsvoll durch die erfindungsgemäße Kombination der LBA/Sulfatchlorid-Beschichtung unterbunden.

Das Verhältnis von Alkalimetallsulfat zum Alkalimetallchlorid im Hüllmaterial kann zwar in einem weiten Molverhältnis schwanken, jedoch sind Molverhältnisse von Alkalimetallsulfat zu Alkalimetallchlorid von etwa 1:1 bis etwa 8:1 zweckmäßig, da angenommen wird, daß in diesem Bereich optimale Verhältnisse für eine Clathratbildung vorliegen; bevorzugt sind Molverhältnisse von Alkalimetallsulfat zu Alkalimetallchlorid von etwa 3:1 bis etwa 5:1.

In einer zweckmäßigen Ausgestaltung der Erfindung beträgt das Gewichtsverhältnis von einerseits der Lactobionsäure, dem Lactobionsäuresalz und/oder dem Lactobionsäurederivat zu andererseits dem Mineralsalzgemisch aus Alkalimetallsulfat und Alkalimetallchlorid 1:1 bis 10:1, vorzugsweise 1,5:1 bis 5:1; insbesondere beträgt das Gewichtsverhältnis etwa 3:1 bis 4:1. Hierbei sind insbesondere solche beschichteten, teilchenförmigen Alkalimetallperoxosalze vorteilhaft, in denen der Anteil der Kombination, vorzugsweise des Gemisches, aus dem Hüllmaterial Lactobionsäure, Lactobionsäuresalz und/oder Lactobionsäurederivat und aus dem weiteren Hüllmaterial Alkalimetallsulfat/Alkalimetallchlorid-Mineralsalzgemisch insgesamt wenigstens 80 Gew.-%, vorzugsweise wenigstens 90 Gew.-%, bezogen auf die Gesamtmenge des Beschichtungsmaterials beträgt. Bei der vorstehenden Kombination der Hüllmaterialien aus einerseits Lactobionsäure, Lactobionsäuresalz bzw. Lactobionsäurederivat mit andererseits Alkalimetallsulfat/Alkalimetallchlorid-Mineralsalzgemisch können die Hüllmaterialien aus den beiden genannten Gruppen bspw. auch in verschiedenen Hüllschichten enthalten sein; z.B. kann als Alkalimetallperoxosalz PCS zunächst mit einer inneren Hüllschicht aus Alkalimetallsulfat/Alkalimetallchlorid-Mineralsalzgemisch versehen sein, woran sich eine zweite, äußere Beschichtung mit Lactobionsäure, Lactobionsäuresalz bzw. Lactobionsäurederivat anschließt. Bevorzugt liegen die Hüllmaterialien aus den beiden genannten Gruppe aber gemeinsam in einer (in etwa homogenen) Hüllschicht gemischt vor.

Gegebenenfalls können die Beschichtungsmaterialien neben den bereits beschriebenen Hüllmaterialien gemäß der Erfindung noch einen geringen Anteil an anderen, üblichen Hüllmaterialien und/oder weitere bei der Alkalimetallperoxosalz-Herstellung, insbesondere bei der Natriumpercarbonat-Herstellung, übliche Hilfsstoffe enthalten. Der Anteil an derartigen Hilfsstoffen sollte höchstens bis zu 20 Gew.-% bezogen auf Gesamtbeschichtungsmaterial betragen (bei mehreren Schichten bezogen auf alle Schichten). Das heißt, er kann zwischen 0 und 20 Gew.-% des Beschichtungsmaterials liegen. Zu den z.B. bei der Natriumpercarbonat-Herstellung etc. üblichen Hilfsstoffen, welche in dem erfindungsgemäßen Beschichtungsmaterial vorliegen können, zählen beispielsweise Natriumpolyphosphate, insbesondere Natriumhexametaphosphat, welche beispielsweise in Mengen von 0 bis 10 Gew.-% bezogen auf Beschichtungsmaterial vorliegen können; Natriumpolycarboxylate, insbesondere Natriumsalze von Acrylsäurepolymerisaten wie Acrylsäurehomopolymerisaten oder Acrylsäure/Maleinsäurecopolymerisaten mit molaren Massen im Bereich von 2.500 bis 100.000, insbesondere Natriumpolyacrylate, welche in Mengen von 0 bis 10 Gew.-% bezogen auf Beschichtungsmaterial vorliegen können; Natriumsilikate, vorzugsweise Wasserglas mit einem Verhältnis $SiO_2:Na_2O$ von 3,5: 1 bis 2:1, welche in Mengen von 0 bis 20 Gew.-% bezogen auf Beschichtungsmaterial vorliegen können; Phosphonsäuren, insbesondere gegebenenfalls durch Hydroxy substituierte Niederalkanmono- oder -diphosphonsäuren wie z. B. 1-Hydroxyethan-1,1-diphosphonsäure, oder deren Salze, welche beispielsweise in Mengen von 0 bis 5 Gew.-% bezogen auf das Beschichtungsmaterial vorliegen können; und wasserlösliche Magnesiumsalze, insbesondere Magnesiumsulfat, welche in Mengen von 0 bis 10 Gew.-% bezogen auf das Beschichtungsmaterial vorliegen können. Außer den hier genannten Hilfsmitteln können selbstverständlich auch alle sonst für die Herstellung von Alkalimetallperoxosalzen und insbesondere von Natriumpercarbonat bekannterweise einsetzbaren Hilfsstoffe in dem Beschichtungsmaterial zugegen sein.

Die Mindestmenge des gesamten Hüllmaterials in den erfindungsgemäß umhüllten teilchenförmigen Alkalimetallperoxosalzen entspricht im wesentlichen derjenigen Menge, die für eine weitgehend vollständige Umhüllung der Teilchen erforderlich ist. Mit einer Hüllschicht von mindestens 1 Gew.-%, insbesondere mindestens 2 Gew.-%, kann je nach Oberflächeneigenschaften der Alkalimetallperoxosalz-Teilchen bereits eine für die Stabilisierung der Teilchen brauchbare Umhüllung erzielt werden. Die Obergrenze für die Menge des festen Hüllmaterials wird im wesentlichen durch das Ziel bestimmt, den Aktivsauerstoffgehalt in den zu stabilisierenden Teilchen nicht unnötig durch überschüssiges Hüllmaterial zu vermindern. Daher sollte die Menge des festen Hüllmaterials, bezogen auf das Gewicht der umhüllten Teilchen des Alkalimetallperoxosalzes, vorzugsweise möglichst 5 bis 6 Gew.-% nicht übersteigen; Mengen von mehr als 10 Gew.-% erweisen sich demgemäß als wenig zweckmäßig. In der Regel beträgt die Menge an festem Beschichtungsmaterial daher vorzugsweise 2 bis 10 Gew.-%, insbesondere 3 bis 6 Gew.-%, bezogen auf die umhüllten Teilchen des Alkalimetallperoxosalzes. Im genanntem Bereich ist eine vollständige und optimale Umhüllung der Alkalimetallperoxosalze in jedem Fall sichergestellt.

Gemäß der Erfindung können zwar an sich beliebige Alkalimetallperoxosalze durch Umhüllen mit der LBA-Hüllschicht stabilisiert werden, wobei die zu stabilisierenden Teilchen der Peroxoverbindungen sowohl ein einziges Peroxosalz oder auch eine Mischung von Peroxosalzen enthalten können, jedoch ist die Erfindung insbesondere mit Vorteil auf die Stabilisierung von Natriumperoxocarbonat (Natriumpercarbonat) gerichtet. Die zu beschichtenden Peroxosalze können geringe Mengen an verschiedenen, bei der Herstellung dieser Peroxosalze üblichen Zusätzen enthalten, die im allgemeinen 10 Gew.-% des Peroxosalz-Materials nicht übersteigen. Zusätze dieser Art sind z.B. Stabilisatoren, wie insbesondere Alkalimetall- oder Magnesiumsilikate, Magnesiumsulfat, Phosphate (z.B. Metaphosphat), organische Stabilisatoren wie Chinolinsäure, Salicylsäure oder Dipicolinsäure (DPA), Chelatbildner wie 8-Oxychinolin oder Ethylendiamintetraessigsäure (EDTA), Phosphonsäurederivate wie z.B. Methylen- oder Aminomethylenphosphonsäuren oder deren Salze, insbesondere 1-Hydroxyethylidendiphosphonsäure (HEDP), sowie auch geringe Mengen üblicher Netzmittel.

Die dem erfindungsgemäß umhüllten teilchenförmigen Alkalimetallperoxosalz, insbesondere dem umhüllten Percarbonat, zugrunde liegende Peroxoverbindung kann nach jedem im Stand der Technik hierzu bekannten Verfahren hergestellt worden sein. Solche Verfahren zur Herstellung von Alkalimetallperoxosalzen umfassen insbesondere sogenannte Naß- und Trockenverfahren und sind dem Fachmann hinlänglich bekannt. Die erfindungsgemäß zu beschichtenden Alkalimetallperoxosalze können vor dem Aufbringen der Hüllschicht auch einem Granulationsschritt unterworfen worden sein, um die Teilchengröße zu erhöhen. Als Granulationsverfahren eignen sich z.B. sowohl Kompaktierverfahren (trockene Granulation) als auch Aufbaugranulationsverfahren (Feuchtgranulation), ggf. unter Einsatz von an sich üblichen Binde- und Granulierhilfsmitteln. Große und schwere Teilchen können auch direkt durch Trockenherstellverfahren erhalten werden. Die erhaltenen schweren Teilchen eignen sich nach erfindungsgemäßer Umhüllung vorteilhaft für den Einsatz in kompakten Wasch- und Bleichmitteln.

Demgemäß lassen sich die erfindungsgemäßen, umhüllten teilchenförmigen Alkalimetallperoxosalze generell in Waschoder Bleichmitteln verwenden, insbesondere aber in Kompaktwasch- oder Kompaktbleichmitteln.

Die Erfindung betrifft auch ein Verfahren zur Herstellung der erfindungsgemäß durch Beschichtung stabilisierten, teilchenförmigen Alkalimetallperoxosalze durch Umhüllen mit einer festen Hüllschicht, deren Hüllmaterial einen wesentlichen Anteil an Lactobionsäure, einem Lactobionsäuresalz und/oder einem Lactobionsäurederivat enthält; dieses Verfahren zur Herstellung der erfindungsgemäßen, umhüllten teilchenförmigen Alkalimetallperoxosalze wird derart ausgeführt, daß man die Teilchen der Peroxosalze mit einem die Bestandteile des Hüllmaterials (gelöst oder suspendiert) enthaltenden wäßrigen Beschichtungsmittel (Coating-Mittel) behandelt und dann zur Trocknung der behandelten Teilchen das Wasser verdampft. Bei dieser Verfahrensweise wird auf der Oberfläche der Alkalimetallperoxosalz-Teilchen eine Hüllschicht erzeugt, die als Hüllmaterialien Lactobionsäure, Lactobionsäuresalze und/oder ein Lactobionsäurederivat sowie gegebenenfalls auch bei der Alkalimetallperoxosalz-Herstellung übliche Hilfsstoffe enthält.

Die Konzentration, in der die verschiedenen Bestandteile des Hüllmaterials im Coating-Mittel enthalten sind, wird zweckmäßigerweise so gewählt, daß im wäßrigen Coating-Mittel ein ausreichend hoher Feststoffgehalt (Gehalt der gelösten und/oder suspendierten Hüllmaterialien und sonstigen üblichen Hilfsstoffe im Coating-Mittel) für den angestrebten Beschichtungsgrad vorliegt und die Feuchte des mit dem wäßrigen Coating-Mittel behandelten Alkalimetallperoxosalzes nicht zu stark ansteigt; es muß dann bei der sich an das Aufbringen des Coating-Mittels anschließenden Trocknung nur vergleichsweise wenig Wasser verdampft werden. Zweckmäßigerweise beträgt der Feststoffgehalt im wäßrigen Beschichtungsmittel daher insgesamt mindestens 25 Gew.-%, vorzugsweise mindestens 40 Gew.-%. Insbesondere werden im erfindungsgemäßen Verfahren Beschichtungsmittel mit Feststoffgehalten von 40 bis 60 Gew.-% eingesetzt. Die pH-Werte dieser Coating-Mittel können je nach den verwendeten Hüllmaterialien in einem weiten Bereich von sauer bis alkalisch variieren, bspw. von pH-Werten um etwa 1,5 bis etwa 12. Werden Säuren als Hüllmaterialien eingesetzt (bspw. Lactobionsäure bzw. ggf. Borsäure), so kann der pH-Wert auch durch Zugabe von Alkali- und/oder Erdalkalimetallhydroxiden oder -oxiden (insbesondere mit NaOH oder einer anderen Alkalimetallauge) auf einen gewünschten Wert eingestellt werden. Die Feuchte des mit dem wäßrigen Coating-Mittel behandelten Alkalimetallperoxosalzes sollte nicht zu hoch ausfallen, da sonst ggf. die Trocknung des Produktes unnötig erschwert wird; demgemäß wird die Feuchte des behandelten Produktes vor dem Trocknen im allgemeinen unter 9 Gew.-% liegen und vorzugsweise 2,5 bis 6 Gew.-% betragen.

Die Temperatur, bei der die Teilchen mit dem Coating-Mittel behandelt und das Verdampfen des Wassers durchgeführt wird, wird in Abhängigkeit von der Art der zu behandelnden Peroxoverbindung ausgewählt. Die Behandlung der Alkalimetallperoxosalz-Teilchen mit dem Coating-Mittel wird im allgemeinen bei einer Temperatur durchgeführt, die geringfügig unterhalb bis geringfügig oberhalb der Temperatur aus dem Herstellschritt der zu umhüllenden Teilchen liegt. Beim Aufbringen des Coatingmittels werden die Teilchen der Peroxoverbindung zweckmäßig bei einer Temperatur gehalten, die unterhalb der Zersetzungstemperatur der Peroxoverbindung und im allgemeinen unterhalb 90 °C liegt. Beim Verdampfen des Wassers zur Trocknung der Teilchen liegt die Temperatur im allgemeinen zwischen 30 und 80 °C.

Bei der Trocknung der mit dem Coating-Mittel behandelten Alkalimetallperoxosalze sollte das Wasser bis auf einen möglichst geringen Restwasseranteil entfernt werden, bspw. in jedem Fall auf einen Restwasseranteil von unter 2 Gew.-%. Vorzugsweise wird auf Restwassergehalte von unter 1 Gew.-%, insgesondere von unter 0,6 Gew.-%, getrocknet.

Das Aufbringen der Hüllschicht auf die Alkalimetallperoxosalz-Teichen kann sowohl in diskontinuierlicher als auch in kontinuierlicher Arbeitsweise erfolgen. Bei diskontinuierlicher Arbeitsweise können die Peroxosalz-Teilchen beispielsweise in einem geeigneten Mischer, z. B. einem Pflugscharmischer behandelt und nachfolgend der Trocknung (beispielsweise in einer Wirbelschicht) zugeführt werden. Die Peroxosalz-Teilchen können auch in einer Wirbelschicht mit der Lösung der Hüllmaterial-Bestandteile besprüht werden; hierbei kann im Wirbelbett gleichzeitig das Wasser verdampft werden und man erhält in einem Schritt trockene, umhüllte Teilchen. Das Wirbelschichtverfahren wird in an sich üblicher Weise durchgeführt und kann auch kontinuierlich ausgestaltet werden. In einer weiteren Variante des Verfahrens zur Herstellung der erfindungsgemäß umhüllten Alkalimetallperoxosalze wird das Hüllmaterial, sowie gegebenenfalls die zusätzlichen an sich üblichen Hilfsstoffe, in einem Ringschichtmischer auf das teilchenförmige Alkalimetallperoxosalz aufgebracht. In einem solchen Ringschichtmischer werden die zu umhüllenden Teilchen bei Umdrehungen von insbesondere 1500 bis 1800 Upm (Umdrehungen pro Minute) innerhalb einer Ringschicht an der Wandung des Ringschichtmischers mit dem wäßrigen Coating-Mittel intensiv gemischt. Das im Ringschichtmischer erzeugte, noch feuchte Produkt wird nachfolgend in konventioneller Weise, beispielsweise in einem Wirbelschicht-Trockner, getrocknet. Das Herstellverfahren unter Verwendung des Ringschichtmischers ist ein effektives Verfahren und führt zu günstigen Produkten, insbesondere zu Produkten mit besonders homogener Beschichtung.

Sollen erfindungsgemäß beschichtete Alkalimetallperoxosalz-Teilchen hergestellt werden, deren Hüllschicht eine Kombination von Lactobionsäure und/oder Lactobionssäuresalz mit Borsäure und/oder Borsäuresalz als weiterem Hüllmaterial enthält, so kann diese Kombination von Hüllmaterialien in einem Schritt als Gemisch aufgebracht werden, wobei eine einheitliche Hüllschicht aus Lactobionsäure/Lactobionsäuresalz und Borsäure/Borsäuresalz gebildet wird. Gewünschtenfalls kann die Kombination der vorstehenden Hüllmaterialien aber auch in mehreren Schritten getrennt nach den Komponenten aufgebracht werden, wobei dann eine mehrschichtige Hüllschicht mit schalenartigem Aufbau erhalten wird. Bspw. kann gemäß dieser letztgenannten Variante zunächst eine erste innere Hüllschicht, enthaltend Borsäure und/oder Borsäuresalz, aufgebracht werden und danach eine Lactobionsäure und/oder Lactobionsäuresalz enthaltende äußere Hüllschicht. In analoger Weise in einem oder gegebenenfalls mehreren Schritten wird verfahren, wenn erfindungsgemäß beschichtete Alkalimetallperoxosalz-Teilchen hergestellt werden, deren Hüllschichten eine Kombination von Lactobionsäure, Lactobionsäuresalz und/oder Lactobionsäurederivat mit einem Mineralsalzgemisch aus Alkalimetallsulfat und Alkalimetallchlorid als weiterem Hüllmaterial enthalten.

Die erfindungsgemäßen, beschichteten Alkalimetallperoxosalz-Teilchen weisen eine günstige Kombination verschiedener Vorteile auf. So werden gemäß der Erfindung vorteilhaft umhüllte Teilchen von Peroxoverbindungen zur Verfügung gestellt, die sowohl gegen die Feuchtigkeit aus den Basisbestandteilen von Waschmitteln als auch gegen die diesen Alkalimetallperoxosalz-Teilchen innewohnende Restfeuchtigkeit gut stabilisiert sind. Ferner wird durch die Hüllschicht gemäß der Erfindung in effektiver Weise auch das sich, insbesondere bei Percarbonat, aus diesen Verbindungen während der Lagerung ggf. noch abspaltende Wasserstoffperoxid gebunden; aufgrund dieser Fixierung von freigesetztem Wasserstoffperoxid kann sich dieses nicht mehr unter Verlust von Aktivsauerstoff zu Wasser zersetzen. Die erfindungsgemäß umhüllten Alkalimetallperoxosalze, insbesondere das Percarbonat, weisen sehr gute Stabilität auch in Gegenwart von üblichen Bestandteilen von Waschmitteln, wie beispielsweise Zeolithe, lineare Alkylsulfonate, Seife, Carboxymethylcellulose, Soda, optische Aufheller etc. auf. Die Wasserlöslichkeit und die Lösegeschwindigkeit der erfindungsgemäß umhüllten Alkalimetallperoxosalz-Teilchen werden durch die erfindungsgemäße Beschichtung nicht vermindert; gute anwendungstechnische Eigenschaften sind somit gewährleistet.

Durch die Erfindung wird es möglich, stabile Alkalimetallperoxosalz-Teilchen, insbesondere Percarbonat-Teilchen, mit einer LBA-Hüllschicht zu erzeugen. Hierbei bleiben überraschenderweise die Builder- und Cobuilder-Eigenschaften der Lactobionsäure, des Lactobionsäuresalzes bzw. die oberflächenaktiven Eigenschaften der Lactobionsäurderivate erhalten. So wird weder das sehr gute Dispergiervermögen noch das sehr gute Sequestriervermögen der Lactobionsäure bzw. der Lactobionsäuresalze durch die Verwendung als Hüllmaterial für die Beschichtung von Alkalimetallperoxosalzen beeinträchtigt. Wird die Lactobionsäure und/oder ein Lactobionsäuresalz in Kombination mit Borsäure bzw. einem Borsäuresalz (Borat) als Hüllmaterial für die Beschichtung der Alkalimetallperoxosalze verwendet, so kann zusätzlich zu der sich hierdurch ergebenden Stabilisierung des Alkalimetallperoxosalzes (insbesondere Percarbonates) auch die Eignung dieses speziellen Beschichtungsmaterials als Builder bzw. Cobuilder sehr vorteilhaft genutzt werden. Das erfindungsgemäße Hüllmaterial kann somit zusätzlich zu der Beschichtungsfunktion auch noch eine Builder-Funktion in anwendungsfertigen Zusammensetzungen übernehmen; es ist somit möglich, den Anteil an sonstigen in diesen Zusammensetzungen enthaltenen Buildern bzw. Cobuildern um den Anteil des mit dem beschichteten Alkalimetallperoxosalz eingebrachten erfindungsgemäßen Hüllmaterials zu vermindern.

Die nachfolgenden Beispiele dienen der weiteren Erläuterung der Erfindung. Es bedeuten: U/min. = Umdrehung pro Minute; min.= Minute; RT = Raum- bzw. Umgebungstemperatur (etwa 20°C); % = Gew.-%; LBA = Lactobionsäure; CaLBA = Calciumlactobionat; KLBA = Kaliumlactobionat; NaLBA = Natriumlactobionat; LA = Lactobionsäurekokosamid; h = Stunde; vac. = Vakuum; NaOH = Natriumhydroxid; $H_3BO_3$ = Borsäure; Avox = Aktivsauerstoffgehalt; LKB = Wärmeflußmessungen.

Beispiel 1

Zur Herstellung von Mustermengen erfindungsgemäß beschichteter PCS-Teilchen wurde nach folgendem Verfahren gearbeitet: Eine abgewogene Menge (2 bis 3 kg, vorzugsweise 2,5 kg) Natriumpercarbonat wurde in einen Lödige-Mischer gefüllt und die Mischerwelle auf eine Drehzahl von etwa 200 U/min. eingestellt. Dann wurde die für den jeweiligen Beschichtungsgrad (b) berechnete Menge (c) des Beschichtungsmittels (Coating-Mittel = Hüllmaterialien in Wasser gelöst) gleichmäßig innerhalb 1 min. über einen Tropftrichter in den Mischer dosiert. Nach Zugabe des Beschichtungsmittels wurde noch etwa 1 min. nacngemischt. Anschließend wurde das feuchte Produkt dem Mischer entnommen und portionsweise (ca. 2 kg) im Glatt-Wirbelbetttrockner mit einer Zulufttemperatur von 95 bis 120 °C und einer Ablufttemperatur bis 70 °C getrocknet. Die Zuluftmenge wurde dabei so einreguliert, daß ein geringer Unterdruck im Trockner vorhanden war und gleichzeitig eine völlige Durchwirbelung des Produktes erreicht wurde. Sobald die Ablufttemperatur von 70 °C erreicht war, wurde das Produkt aus dem Trockner entnommen und an der Luft auf RT abgekühlt.

Berechnung von Beschichtungsgrad (b), Menge des erforderlichen Beschichtungsmittels (c) und der Feuchte (d) nach Zugabe des Beschichtungsmittels sowie Menge des aufzutragenden Hüllmaterials (= Feststoff, a) :

$$b[\%] = \frac{a[g] * 100}{e[g]} \qquad c[g] = \frac{a[g] * 100}{g[\%]}$$

$$d[\%] = \frac{c[g] * (100\text{-}g[\%])}{c[g] + f[g]} \qquad a[g] = \frac{b[\%] * 1000}{100 - b[\%]}$$

Darin bedeuten:

a =  Hüllschicht = aufzutragender Feststoff [g]
b =  Beschichtungsgrad [%] = prozentualer Anteil der Hüllschicht (Gesamtstoffgehalt) im Endprodukt
c =  aufzubringendes Beschichtungsmittel [g] (= Coatinglösung)
d =  Feuchte [%] = prozentualer Wasseranteil im Produkt nach Zugabe der Coatinglösung
e =  beschichtetes Natriumpercarbonat [g] = PCS + Hüllschicht
f =  Natriumpercarbonat, Ausgangsprodukt [g]
g =  Feststoffgehalt [%] der Coatinglösung

Der mittlere Korndurchmesser des eingesetzten PCS betrug (mit Ausnahme der Versuche Nr. 15 und 16) 500 bis 600 µm; in den Versuchen Nr. 15 und 16 betrug der mittlere Korndurchmesser des Ausgangs-PCS 600 bis 700 µm. Einzelne Bedingungen der ausgeführten Versuche lassen sich jeweils der Tabelle I (Versuche Nr. 1 bis 16) entnehmen.

Man erhielt nach dem vorstehenden Verfahren beschichtete PCS-Teilchen mit den in Tabelle II angegebenen Eigenschaften (Versuche Nr. 1 bis 16).

## Beispiel 2

Analog der Arbeitseise im Beispiel 1 wurde eine Beschichtung aus zwei Schichten auf Natriumpercarbonat (PCS) in einem Zweistufen-Verfahren aufgebracht. Dazu wurde gemäß Beispiel 1 zunächst in einer ersten Stufe eine Beschichtungslösung aus Borax-Pentahydrat (auf Bor umgerechnete Menge: 41 g/kg auf Bor) und Wasserglas (Menge auf $Na_2O$ bzw. $SiO_2$ umgerechnet: 121 g/kg $Na_2O$ und 53 g/kg $SiO_2$) auf PCS aufgebracht und beschichtet; Konzentration der Coatinglösung [%] = 44,3; Feuchte d [%] = 1,6. In einer zweiten Stufe wurde anschließend das vorstehend beschichtete PCS mit einer weiteren Beschichtungslösung aus 475 g/kg LBA und 49 g/kg NaOH beschichtet; Konzentration der Coatinglösung [%] = 51,3; pH-Wert = 10,1; Feuchte d [%] = 3,7. Der Beschichtungsgrad betrug nach der ersten Stufe 1,3 % und nach der zweiten Stufe 1,3 % + 4% = 5,3 % (Gesamtbeschichtungsgrad). Der mittlere Korndurchmesser des Ausgangs-PCS betrug 500 bis 600 µm. Die Eigenschaften der nach diesem Beispiel erhaltenen, beschichteten PCS-Teilchen sind ebenfalls in Tabelle II angegeben.

## Beispiel 3

Zur Herstellung von Mustermengen erfindungsgemäß beschichteter PCS-Teilchen wurde eine abgewogene Menge von 2 bis 2,5 kg Natriumpercarbonat in einen Lödige-Mischer gefüllt und analog Beispiel 1 verarbeitet. Die Berechnung von Beschichtungsgrad (b), Menge des erforderlichen Beschichtungsmittels (c) und der Feuchte (d) nach Zugabe des Beschichtungsmittels sowie Menge des aufzutragenden Hüllmaterials (= Feststoff, a) erfolgte ebenfalls wie in Beispiel 1 angegeben. Als Coatinglösung wurde eine klare wäßrige Lösung eingesetzt, die auf 1000 g Lösung aus 296 g Natriumlactobionat, 89 g Natriumsulfat ($Na_2SO_4$), 9 g Natriumchlorid (NaCl) und Rest Wasser bestand (Versuch Nr. 17). Das Beispiel mit der vorstehenden Coatinglösung wurde wiederholt (Nr. 18). In einem weiteren Beispiel (Nr. 19) bestand die Coatinglösung (bezogen auf 1000 g Lösung) aus 200 g Natriumlactobionat, 181 g Natriumsulfat, 19 g Natriumchlorid und Rest Wasser.

Der mittlere Korndurchmesser des eingesetzten PCS betrug etwa 650 µm. Einzelne Bedingungen der ausgeführten Versuche lassen sich jeweils der Tabelle I (Versuche Nr. 17 bis 19) entnehmen.

Man erhielt nach dem vorstehenden Verfahren beschichtete PCS-Teilchen mit den in Tabelle III angegebenen Eigenschaften (Versuche Nr. 17 bis 19).

## Beispiel 4

An den im vorstehenden Beispiel hergestellten, erfindungsgemäß beschichteten Natriumpercarbonat-Produkten wurden zur Beurteilung der Lagerfähigkeit und der Stabilitätseigenschaften Wärmefluß-Messungen ("LKB"-Messungen) durchgeführt. Bei diesen Wärmefluß-Messungen geben die bei isothermen Meßbedingungen auftretenden Wärmeflüsse Hinweise auf die Stabilität des aktivsauerstoffhaltigen Produktes; insbesondere läßt sich auch die Stabilität des Produktes in Gegenwart von Waschmittelbestandteilen ermitteln, wenn die Wärmefluß-Messungen an Proben vorgenommen werden, in denen das aktivsauerstoffhaltige Produkt mit den Waschmittelbestandteilen gemischt vorliegt. Für die hier durchgeführten Wärmefluß-Messungen wurden daher die erfindungsgemäß beschichteten, frischen PCS-Produkte (entweder sofort oder 1 bis 2 Tage nach Herstellung) oder über einige Tage gereifte PCS-Produkte in einer solchen Menge in eine Waschmittelbasis eingebracht, daß der Aktivsauerstoffgehalt 2 % betrug. Die Reifezeit eintspricht hierbei in etwa solchen Zeiträumen, über die PCS üblicherweise gelagert und/oder transportiert wird (z.B. einige Tage bis 2 Wochen), bis es vom Waschmittelhersteller in die Waschmittelformulierung eingebracht wird. Die verwendete Waschmittelbasis war ein aktivsauerstofffreies Standardwaschmittel auf Zeolithbasis, welches als Bestandteile in üblichen Mengen Zeolith, lineare Alkylsulfonate (LAS), Seife, Carboxymethylcellulose (CMC), Soda und optische Aufheller enthielt. Die Wärmefluß-Messungen an diesen Proben wurden in einem LKB 2277 Bio Activity Monitor bei 40 °C über einen Zeitraum von 20 h durchgeführt. Die gefundenen Meßwerte für erfindungsgemäß beschichtrete Natriumpercarbonat-Teilchen sind in den Tabellen II und III angegeben.

Zum Vergleich mit den erfindungsgemäßen Proben wurden in gleicher Weise auch Wärmefluß-Messungen an Natriumpercarbonat-Produkten des Standes der Technik, die mit Natriumcarbonat oder Natriumcarbonat/Natriumsulfat (Mol-Verhältnis 2,5:1; Beschichtungsgrad 2,5 und 3 Gew.-%) beschichtet waren, durchgeführt. Die jeweils gemessenen Wärmeflußwerte in µW/g sind in der Tabelle IV wiedergegeben.

Je niedriger der gemessene Wärmefluß, desto höher ist die Stabilität des aktivsauerstoffhaltigen Produktes in der Waschmittelbasis, bzw. umso vorteilhafter ist die jeweilige Beschichtung der beschichteten PCS-Teilchen.

**Beispiel 5**

Zur Bestimmung der chemischen Stabilität des beschichteten Natriumpercarbonates wurde der Aktivsauerstoffverlust (AvoxStabilität) bestimmt. Hierzu wurde das Produkt 2 h auf 105 °C erwärmt und der durch Zersetzung bedinge Verlust an Aktivsauerstoff ermittelt. Die Bestimmung des Aktivsauerstoffes erfolgte hierbei nach an sich üblichen titrimetrischen Methoden. Die gefundenen Werte sind in den Tabellen II und III angegeben.

Tabelle I: Beschichtungsbedingungen, Beispiele 1 und 3

| Nr. | Beschichtungs-lösung (g/kg) | Beschich-tungsgrad b (%) | Feststoffgehalt g der Beschich-tungslösung (%) | pH-Wert | Feuchte d (%) |
|---|---|---|---|---|---|
| 1 | 250 LBA | 2 | 25 | 2,1 | 5,7 |
| 2 | 250 LBA | 3 | 25 | 2,1 | 8,3 |
| 3 | 500 LBA | 4 | 50 | 1,6 | 3,9 |
| 4 | 475 LBA<br>49 NaOH | 4 | 51,3 | 10,1 | 3,6 |
| 5 | 458 LBA<br>83 $H_3BO_3$ | 3,7 | 54 | – | 3,1 |
| 6 | 419 LBA<br>73 $H_3BO_3$<br>84 NaOH | 3,8 | 58 | 7,0 | 2,7 |
| 7 | 350 CaLBA<br>50 LA | 4 | 40 | 4,9 | 5,7 |
| 8 | 350 KLBA<br>50 LA | 4 | 40 | 5,9 | 5,7 |

EP 0 739 307 B1

Tabelle I: Fortsetzung

| 9  | 475 LBA<br>49 NaOH | 4 | 51,3 | 10,1 | 3,6 |
|----|--------------------|---|------|------|-----|
| 10 | 425 NaLBA | 4 | 42,5 | 7,6 | 5,1 |
| 11 | 415 LBA<br>0,4 LA<br>75,8 $H_3BO_3$<br>93,4 NaOH | 4 | 56,4 | 10,4 | 3,0 |
| 12 | 383 NaLBA<br>59,3 $H_3BO_3$<br>40 NaOH | 4 | 47,4 | 11,1 | 4,3 |
| 13 | 364 KLBA<br>55 $H_3BO_3$<br>36 NaOH | 4 | 44,7 | 11,6 | 4,7 |
| 14 | 363 CaLBA<br>54 $H_3BO_3$<br>37 NaOH | 4 | 45,3 | 10,6 | 4,6 |
| 15 | 425 NaLBA | 4 | 42,5 | 7,6 | 5,1 |
| 16 | 383 NaLBA<br>59,3 $H_3BO_3$<br>40,4 NaOH | 4 | 47,4 | 11,1 | 4,3 |

Tabelle I: Fortsetzung

| 17 | 296 NaLBA<br>89 Na$_2$SO$_4$<br>9 NaCl | 5 | 39,4 | 6,9 | 7,1 |
|---|---|---|---|---|---|
| 18 | 296 NaLBA<br>89 Na$_2$SO$_4$<br>9 NaCl | 5 | 39,4 | 6,9 | 7,1 |
| 19 | 200 NaLBA<br>181 Na$_2$SO$_4$<br>19 NaCl | 5 | 40 | 6,9 | 7,1 |

EP 0 739 307 B1

Tabelle II: Eigenschaften von erfindungsgemäß beschichtetem PCS
gemäß Beispiel 1 und Beispiel 2

| Bsp.1 Nr: | Avox (%) | LKB-Werte in Waschmittel-basis (µW/g) [Beispiel 4] | Stabilität 2h/105°C (%) [Beispiel 5] | Korndurch-messer (µm) | Lösege-schwindigkeit (%) nach | | Restfeuchte 2h/40°C/ vac. (%) |
|---|---|---|---|---|---|---|---|
| 1 | 13,8 | 17 (1 Tag) 22 (7 Tage) | 14 | 630 | 1 min 2 min 3 min | 86 98 100 | 0,25 |
| 2 | 13,7 | 14 (1 Tag) 16 (7 Tage) | 15 | 650 | 1 min 2 min 3 min | 86 98 100 | 0,25 |
| 3 | 13,5 | 10 (2 Tage) 14 (7 Tage) | 13 | 650 | 1 min 2 min 3 min | 82 98 100 | 0,40 |
| 4 | 13,4 | 4 (2 Tage) 10 (6 Tage) 9 (29 Tage) | 14 | 680 | 1 min 2 min 3 min | 83 97 100 | 0,37 |
| 5 | 13,6 | 14 (1 Tag) | 14 | 680 | 1 min 2 min 3 min | 86 98 100 | 0,52 |

EP 0 739 307 B1

Tabelle II: Fortsetzung

| 6 | 13,4 | 15 (1 Tag) | 15 | 660 | 1 min 82 | 0,72 |
| | | | | | 2 min 97 | 0,76 |
| | | | | | 3 min 100 | |
| 7 | 13,6 | 8 (1 Tag) | – | 710 | 1 min 73 | 0,28 |
| | | 14 (16 Tage) | | | 2 min 91 | |
| | | | | | 2 min 98 | |
| 8 | 13,6 | 16 (1 Tag) | – | 700 | 1 min 73 | 0,38 |
| | | | | | 2 min 94 | |
| | | | | | 3 min 99 | |
| 9 | 13.4 | 8,5 (1Tag) | 14 | 650 | 1 min 83 | 0,35 |
| | | 11 (12 Tage) | | | 2 min 96 | |
| | | | | | 3 min 100 | |
| 10 | 13,4 | 8 (2 Tage) | 15 | 630 | 1 min 81 | 0,27 |
| | | | | | 2 min 97 | |
| | | | | | 3 min 100 | |
| 11 | 13,5 | 20 (1 Tag) | 16 | 650 | 1 min 88 | 0,46 |
| | | | | | 2 min 99 | |
| | | | | | 3 min 100 | |
| 12 | 13,5 | 19 (1 Tag) | 18 | 660 | 1 min 88 | 0,57 |
| | | | | | 2 min 98 | |
| | | | | | 3 min 100 | |

Tabelle II: Fortsetzung

| | | | | | | | |
|---|---|---|---|---|---|---|---|
| 13 | 13,5 | 18 (1 Tag) | – | 640 | 1 min 88<br>2 min 99<br>3 min 100 | 0,53 |
| 14 | 13,6 | 17 (2 Tage) | 17 | 610 | 1 min 81<br>2 min 97<br>3 min 100 | 0,34 |
| 15 | 13,6 | 16 (1 Tag)<br>19 (4 Tage) | 9 | 790 | 1 min 66<br>2 min 89<br>3 min 98 | 0,35 |
| 16 | 13,6 | 16 (1 Tag)<br>16 (4 Tage) | 11 | 780 | 1 min 69<br>2 min 92<br>3 min 97 | 0,63 |
| Bsp.2 | 13,3 | 9 (1 Tag)<br>10 (12 Tage) | 18 | 680 | 1 min 80<br>2 min 92<br>3 min 100 | 0,71 |

EP 0 739 307 B1

Tabelle III: Eigenschaften von erfindungsgemäß beschichtetem PCS
gemäß Beispiel 3

| Bsp.3 Nr: | Avox (%) | LKB-Werte in Waschmittel-basis (µW/g) [Beispiel 4] | Stabilität 2h/105°C (%) [Beispiel 5] | Korndurch-messer (µm) | Lösege-schwindig-keit (%) nach | | Restfeuchte 2h/40°C/ vac. (%) |
|---|---|---|---|---|---|---|---|
| 1 | 13,4 | 7 (0 Tage) | 10 | 740 | 1 min<br>2 min<br>3 min | 80<br>95<br>100 | 0,35 |
| 2 | 13,4 | 7 (3 Tage) | 11 | 690 | 1 min<br>2 min<br>3 min | 78<br>96<br>100 | 0,35 |
| 3 | 13,5 | 9 (0 Tage) | 9 | 720 | 1 min<br>2 min<br>3 min | 81<br>97<br>100 | 0,35 |

EP 0 739 307 B1

Tabelle IV: Vergleichsbeispiele [gemäß Stand der Technik; frisches Produkt (1 bis 2 Tage)]

| Nr. | Avox (%) | LKB-Werte in Waschmittelbasis ($\mu$W/g) [Beispiel 4] | Beschichtung |
|---|---|---|---|
| V 1 | 13,3 | 54 | $Na_2CO_3$ / Beschichtungsgrad 6 Gew.-% |
| V 2 | 13,7 | 25-56 | $Na_2CO_3$ / $Na_2SO_4$ (2,5:1) / Beschichtungsgrad 2,5 Gew.-% |
| V 3 | 13,6 | 42-55 | $Na_2CO_3$ / $Na_2SO_4$ (2,5:1) / Beschichtungsgrad 3 Gew.-% |

**Patentansprüche**

1. Beschichtetes, teilchenförmiges Alkalimetallperoxosalz, insbesondere aus der Gruppe Peroxocarbonate, Peroxopyrophosphat, Peroxotripolyphosphat und/oder Peroxomonosulfat, dadurch gekennzeichnet, daß das Alkalimetallperoxosalz von einer Hüllschicht umgeben ist, die als Hüllmaterial Lactobionsäure, ein Lactobionsäuresalz und/oder ein Lactobionsäurederivat sowie gegebenenfalls auch bei der Alkalimetallperoxosalz-Herstellung übliche Hilfsstoffe enthält.

2. Beschichtetes, teilchenförmiges Alkalimetallperoxosalz nach Anspruch 1, dadurch gekennzeichnet, daß die Hüllschicht die Lactobionsäure, ein Lactobionsäuresalz und/oder ein Lactobionsäurederivat in einer Gesamtmenge von wenigstens 50 Gew.-%, vorzugsweise von wenigstens 60 Gew.-%, insbesondere wenigstens 75 Gew.-%, enthält.

3. Beschichtetes, teilchenförmiges Alkalimetallperoxosalz nach Anspruch 1, dadurch gekennzeichnet, daß die Hüllschicht die Lactobionsäure und/oder das Lactobionsäuresalz in Kombination mit, vorzugsweise im Gemisch mit Borsäure und/oder einem Borsäuresalz als weiterem Hüllmaterial enthält.

4. Beschichtetes, teilchenförmiges Alkalimetallperoxosalz nach Anspruch 3, dadurch gekennzeichnet, daß das Molverhältnis von einerseits der Lactobionsäure und/oder dem Lactobionsäuresalz zu andererseits der Borsäure und/oder dem Borsäuresalz 10:1 bis 1:3, vorzugsweise 6:1 bis 1:1,5, insbesondere 1,1:1 bis 1:1,1, bezogen auf Bor beträgt.

5. Beschichtetes, teilchenförmiges Alkalimetallperoxosalz nach Anspruch 3, dadurch gekennzeichnet, daß die Kombination, vorzugsweise das Gemisch, aus dem Hüllmaterial Lactobionsäure und/oder Lactobionsäuresalz und dem weiteren Hüllmaterial Borsäure und/oder Borsäuresalz wenigstens 80 Gew.-%, vorzugsweise wenigstens 90 Gew.-%, des Beschichtungsmaterials beträgt.

6. Beschichtetes, teilchenförmiges Alkalimetallperoxosalz nach Anspruch 1, dadurch gekennzeichnet, daß die Hüllschicht die Lactobionsäure, das Lactobionsäuresalz und/oder das Lactobionsäurederivat in Kombination, vorzugsweise im Gemisch, mit einem anorganischen Mineralsalzgemisch aus Alkalimetallsulfat und Alkalimetallchlorid als weiterem Hüllmaterial enthält.

7. Beschichtetes, teilchenförmiges Alkalimetallperoxosalz nach Anspruch 6, dadurch gekennzeichnet, daß das Gewichtsverhältnis von einerseits der Lactobionsäure, dem Lactobionsäuresalz und/oder dem Lactobionsäurederivat zu andererseits dem Mineralsalzgemisch aus Alkalimetallsulfat und Alkalimetallchlorid 1:1 bis 10:1, vorzugsweise 1,5:1 bis 5:1, insbesondere 3:1 bis 4:1, beträgt.

8. Beschichtetes, teilchenförmiges Alkalimetallperoxosalz nach Anspruch 6 oder 7, dadurch gekennzeichnet, daß das Alkalimetallkation des Sulfates oder Chlorides im Hüllmaterial Natrium oder Kalium ist.

9. Beschichtetes, teilchenförmiges Alkalimetallperoxosalz nach einem der Ansprüche 6 bis 8, dadurch gekennzeichnet, daß das Alkalimetallsulfat zum Alkalimetallchlorid im Molverhältnis von 1:1 bis 8:1, vorzugsweise im Molverhältnis 3:1 bis 5:1, vorliegt.

10. Beschichtetes, teilchenförmiges Alkalimetallperoxosalz nach Anspruch 6, dadurch gekennzeichnet, daß der Anteil der Kombination, vorzugsweise des Gemisches, aus dem Hüllmaterial Lactobionsäure, Lactobionsäuresalz und/oder Lactobionsäurederivat und aus dem weiteren Hüllmaterial Alkalimetallsulfat/Alkalimetallchlorid-Mineralsalzgemisch insgesamt wenigstens 80 Gew.-%, vorzugsweise wenigstens 90 Gew.-%, bezogen auf das Beschichtungsmaterials beträgt.

11. Beschichtetes, teilchenförmiges Alkalimetallperoxosalz nach Anspruch 5 oder 10, dadurch gekennzeichnet, daß das Beschichtungsmaterial höchstens bis zu 20 Gew.-%, vorzugsweise höchstens bis zu 10 Gew.-%, bezogen auf das Beschichtungsmaterial an anderen, üblichen Hüllmaterialien und/oder bei der Alkalimetalperoxosalz-Herstellung üblichen Hilfsstoffen enthält.

12. Beschichtetes, teilchenförmiges Alkalimetallperoxosalz nach Anspruch 11, dadurch gekennzeichnet, daß das Beschichtungsmaterial Hilfsstoffe aus der Gruppe Natriumpolyphosphate, Natriumpolycarboxylate, Natriumsilikate, Phosphonsäuren und deren Salze, und Magnesiumsulfat enthält.

13. Beschichtetes, teilchenförmiges Alkalimetallperoxosalz nach einem der vorstehenden Ansprüche, dadurch gekennzeichnet, daß die Menge des aufgebrachten Beschichtungsmaterials mindestens 1 Gew.-%, vorzugsweise 2 bis 10 Gew.-%, insbesondere 3 bis 6 Gew.-%, bezogen auf das Gewicht der beschichteten Alkalimetallperoxosalz-Teilchen beträgt.

14. Beschichtetes, teilchenförmiges Alkalimetallperoxosalz nach einem der vorstehenden Ansprüche, dadurch gekennzeichnet, daß das Alkalimetallperoxosalz Natriumpercarbonat ist.

15. Verwendung von Lactobionsäure, Lactobionsäuresalzen und/oder Lactobionsäurederivaten als Hüllmaterial für die Beschichtung von Alkalimetallperoxosalzen, vorzugsweise für die Beschichtung von Natriumpercarbonat.

16. Verwendung nach Anspruch 15, dadurch gekennzeichnet, daß man die Lactobionsäure und/oder das Lactobionsäuresalz in Kombination, vorzugsweise im Gemisch, mit dem weiteren Hüllmaterial Borsäure und/oder Borsäuresalz für die Beschichtung von Alkalimetallperoxosalzen, vorzugsweise von Natriumpercarbonat, verwendet.

17. Verwendung nach Anspruch 15, dadurch gekennzeichnet, daß man die Lactobionsäure, das Lactobionsäuresalz und/oder das Lactobionsäurederivat in Kombination, vorzugsweise im Gemisch, mit einem anorganischen Mineralsalzgemisch aus Alkalimetallsulfat und Alkalimetallchlorid als weiteren Hüllmaterial verwendet.

18. Verfahren zur Herstellung von beschichteten, teilchenförmigen Alkalimetallperoxosalzen, insbesondere aus der Gruppe Peroxocarbonat, Peroxopyrophosphat, Peroxotripolyphosphat und/oder Peroxomonosulfat, dadurch gekennzeichnet, daß man die Alkalimetallperoxosalz-Teilchen mit einem wäßrigen Beschichtungsmittel, welches als Hüllmaterial Lactobionsäure, ein Lactobionsäuresalz und/oder ein Lactobionsäurederivat sowie gegebenenfalls auch bei der Alkalimetallperoxosalz-Herstellung übliche Hilfsstoffe gelöst oder suspendiert enthält, behandelt und nachfolgend die mit dem wäßrigen Beschichtungsmittel behandelten Teilchen trocknet.

19. Verfahren nach Anspruch 18, dadurch gekennzeichnet, daß das Beschichtungsmittel einen Feststoffgehalt der gelösten und/oder suspendierten Hüllmaterialien und sonstigen üblichen Hilfsstoffen von insgesamt mindestens 25 Gew.-%, vorzugsweise mindestens 40 Gew.-%, insbesondere 40 bis 60 Gew.-%, besitzt.

20. Verfahren nach Anspruch 18 oder 19, dadurch gekennzeichnet, daß die mit dem wäßrigen Beschichtungsmittel behandelten Teilchen bis zu einem Restwassergehalt von unter 2 Gew.-%, vorzugsweise unter 1 Gew.-%, insbesondere unter 0,6 Gew.-%, getrocknet werden.

21. Verwendung von beschichteten, teilchenförmigen Alkalimetallperoxosalzen gemäß einem der Ansprüche 1 bis 14, als Bleichkomponente in Wasch- oder Bleichmitteln, insbesondere in Kompaktwasch- oder Kompaktbleichmitteln.

**Claims**

1. Coated, particulate alkali metal peroxy salt, belonging in particular to the group of peroxycarbonates, peroxypyrophosphate, peroxytripolyphosphate and/or peroxymonosulphate, characterised in that the alkali metal peroxy salt is surrounded by a coating layer which contains lactobionic acid, a lactobionic acid salt and/or a lactobionic acid derivative and, optionally, also conventional auxiliary substances used in the manufacture of alkali metal peroxy salts, as coating material.

2. Coated, particulate alkali metal peroxy salt according to claim 1, characterised in that the coating layer contains the lactobionic acid, a lactobionic acid salt and/or a lactobionic acid derivative in a total amount of at least 50% by weight, preferably of at least 60% by weight, in particular at least 75% by weight.

3. Coated, particulate alkali metal peroxy salt according to claim 1, characterised in that the coating layer contains the lactobionic acid and/or the lactobionic acid salt in combination, preferably in mixture, with boric acid and/or a boric acid salt as further coating material.

4. Coated, particulate alkali metal peroxy salt according to claim 3, characterised in that the molar ratio of, on the one hand, the lactobionic acid and/or the lactobionic acid salt to, on the other hand, the boric acid and/or the boric acid salt is 10:1 to 1:3, preferably 6:1 to 1:1.5, in particular 1.1:1 to 1:1.1, based on boron.

5. Coated, particulate alkali metal peroxy salt according to claim 3, characterised in that the combination, preferably the mixture, of the coating material lactobionic acid and/or lactobionic acid salt and the further coating material boric acid and/or boric acid salt amounts to at least 80% by weight, preferably at least 90% by weight, of the coating material.

6.  Coated, particulate alkali metal peroxy salt according to claim 1, characterised in that the coating layer contains the lactobionic acid, the lactobionic acid salt and/or the lactobionic acid derivative in combination, preferably in mixture, with an inorganic material salt mixture of alkali metal sulphate and alkali metal chloride as further coating material.

7.  Coated, particulate alkali metal peroxy salt according to claim 6, characterised in that the weight ratio of the lactobionic acid, the lactobionic acid salt and/or the lactobionic acid derivative, on the one hand, to the mineral salt mixture of alkali metal sulphate and alkali metal chloride, on the other hand, is 1:1 to 10:1, preferably 1.5:1 to 5:1, in particular 3:1 to 4:1.

8.  Coated, particulate alkali metal peroxy salt according to claim 6 or 7, characterised in that the alkali metal cation of the sulphate or chloride in the coating material is sodium or potassium.

9.  Coated, particulate alkali metal peroxy salt according to one of claims 6 to 8, characterised in that the alkali metal sulphate is present in a molar ratio to the alkali metal chloride of 1.1 to 8:1, preferably in a molar ratio of 3:1 to to 5:1

10. Coated, particulate alkali metal peroxy salt according to claim 6, characterised in that the proportion of the combination, preferably of the mixture, of the coating material lactobionic acid, lactobionic acid salt and/or lactobionic acid derivative and the additional coating material alkali metal sulphate/alkali metal chloride mineral salt mixture as a whole amounts to at least 80% by weight, preferably at least 90% by weight, based on the coating material.

11. Coated, particulate alkali metal peroxy salt according to one of claims 5 or 10, characterised in that the coating material contains a maximum ofup to 20% by weight, preferably a maximum ofup to 10% by weight, based on the coating material, of other conventional coating materials and/or conventional auxiliary substances used in the manufacture of alkali metal peroxy salts.

12. Coated, particulate alkali metal peroxy salt according to claim 11, characterised in that the coating material contains auxiliary substances belonging to the group of sodium polyphosphates, sodium polycarboxylates, sodium silicates, phosphonic acids and the salts thereof, and magnesium sulphate.

13. Coated, particulate alkali metal peroxy salt according to one ofthe preceding claims, characterised in that the quantity of coating material applied amounts to at least 1% by weight, preferably 2 to 10% by weight, in particular 3 to 6% by weight, based on the weight of the coated alkali metal peroxy salt particles.

14. Coated, particulate alkali metal peroxy salt according to one ofthe preceding claims, characterised in that the alkali metal peroxy salt is sodium percarbonate.

15. Use of lactobionic acid, lactobionic acid salts and/or lactobionic acid derivatives as a coating material for coating alkali metal peroxy salts, preferably for coating sodium percarbonate.

16. Use according to claim 15, characterised in that the lactobionic acid and/or the lactobionic acid salt is used in combination, preferably in mixture, with the further coating material boric acid and/or boric acid salt, for coating alkali metal peroxy salts, preferably sodium percarbonate.

17. Use according to claim 15, characterised in that the lactobionic acid, the lactobionic acid salt and/or the lactobionic acid derivative is used in combination, preferably in mixture, with an inorganic mineral salt mixture of alkali metal sulphate and alkali metal chloride as further coating material.

18. Process for the preparation of coated, particulate alkali metal peroxy salts, in particular from the group of peroxycarbonate, peroxypyrophosphate, peroxytripolyphosphate and/or peroxymonosulphate, characterised in that the alkali metal peroxy salt particles are treated with an aqueous coating agent which contains, as coating material, lactobionic acid, a lactobionic acid salt and/or a lactobionic acid derivative and, optionally, conventional auxiliary substances also used in the manufacture of alkali metal peroxy salt, in the dissolved or suspended state and the particles treated with the aqueous coating agent are dried subsequently.

19. Process according to claim 18, characterised in that the coating agent has a solids content of the dissolved and/or suspended coating materials and other conventional auxiliary agents totalling at least 25% by weight, preferably at least 40% by weight, in particular 40-60% by weight.

**20.** Process according to claim 18 or 19, characterised in that the particles treated with the aqueous coating agent are dried to a residual water content of less than 2% by weight, preferably of less than 1% by weight, in particular of less than 0.6% by weight.

**21.** Use of coated, particulate alkali metal peroxy salts according to one of claims 1 to 14 as a bleaching component in detergents or bleaching agents, in particular in compact detergents or compact bleaching agents.

**Revendications**

**1.** Persel de métal alcalin particulaire enrobé, en particulier du groupe des peroxocarbonates, du peroxopyrophosphate, du peroxotripolyphosphate et/ou du peroxomonosulfate, caractérisé en ce que le persel de métal alcalin est enveloppé d'une couche d'habillage qui contient à titre de matériau d'habillage de l'acide lactobionique, un sel d'acide lactobionique et/ou un dérivé d'acide lactobionique, de même qu'éventuellement aussi des adjuvants courants pour la préparation de persels de métaux alcalins.

**2.** Persel de métal alcalin particulaire enrobé selon la revendication 1, caractérisé en ce que la couche d'habillage contient l'acide lactobionique, un sel d'acide lactobionique et/ou un dérivé d'acide lactobionique en une quantité totale d'au moins 50 % en poids, de préférence d'au moins 60 % en poids, en particulier d'au moins 75 % en poids.

**3.** Persel de métal alcalin particulaire enrobé selon la revendication 1, caractérisé en ce que la couche d'habillage contient l'acide lactobionique et/ou le sel d'acide lactobionique en combinaison avec, de préférence en mélange avec l'acide borique et/ou un sel d'acide borique à titre de matériau d'habillage supplémentaire.

**4.** Persel de métal alcalin particulaire enrobé selon la revendication 3, caractérisé en ce que le rapport molaire de l'acide lactobionique et/ou du sel d'acide lactobionique, d'une part, à l'acide borique et/ou au sel d'acide borique, d'autre part, vaut 10 : 1 à 1 : 3, de préférence 6 : 1 à 1 : 1,5, en particulier 1,1 : 1 à 1 : 1,1, par rapport au bore.

**5.** Persel de métal alcalin particulaire enrobé selon la revendication 3, caractérisé en ce que la combinaison, de préférence le mélange, constitué(e) du matériau d'habillage d'acide lactobionique et/ou de sel d'acide lactobionique et du matériau d'habillage supplémentaire d'acide borique et/ou de sel d'acide borique vaut au moins 80 % en poids, de préférence au moins 90 % en poids du matériau d'enrobage.

**6.** Persel de métal alcalin particulaire enrobé selon la revendication 1, caractérisé en ce que la couche d'habillage contient l'acide lactobionique, le sel d'acide lactobionique et/ou le dérivé d'acide lactobionique en combinaison avec, de préférence en mélange avec un mélange de sels minéraux inorganiques constitué de sulfate de métal alcalin et de chlorure de métal alcalin à titre de matériau d'habillage supplémentaire.

**7.** Persel de métal alcalin particulaire enrobé selon la revendication 6, caractérisé en ce que le rapport pondéral de l'acide lactobionique, du sel d'acide lactobionique et/ou du dérivé d'acide lactobionique, d'une part, au mélange de sels minéraux constitué de sulfate de métal alcalin et de chlorure de métal alcalin, d'autre part, vaut 1 : 1 à 10 : 1, de préférence 1,5 1 à 5 : 1, en particulier 3 : 1 à 4:1.

**8.** Persel de métal alcalin particulaire enrobé selon la revendication 6 ou 7, caractérisé en ce que le cation de métal alcalin du sulfate ou du chlorure dans le matériau d'habillage est le sodium ou le potassium.

**9.** Persel de métal alcalin particulaire enrobé selon l'une des revendications 6 à 8, caractérisé en ce que le rapport molaire du sulfate de métal alcalin au chlorure de métal alcalin vaut 1 : 1 à 8 : 1, de préférence 3 : 1 à 5 : 1.

**10.** Persel de métal alcalin particulaire enrobé selon la revendication 6, caractérisé en ce que la proportion de la combinaison, de préférence du mélange, constitué(e) du matériau d'habillage d'acide lactobionique, du sel d'acide lactobionique et/ou du dérivé d'acide lactobionique et du matériau d'habillage supplémentaire du mélange de sels minéraux de sulfate de métal alcalin/chlorure de métal alcalin vaut en tout au moins 80 % en poids, de préférence au moins 90 % en poids par rapport au matériau d'enrobage.

**11.** Persel de métal alcalin particulaire enrobé selon la revendication 5 ou 10, caractérisé en ce que le matériau d'enrobage contient au maximum jusqu'à 20 % en poids, de préférence au maximum jusqu'à 10 % en poids, par rapport au matériau d'enrobage, d'autres matériaux d'habillage courants et/ou d'adjuvants courants pour la préparation de persels de métaux alcalins.

12. Persel de métal alcalin particulaire enrobé selon la revendication 11, caractérisé en ce que le matériau d'enrobage contient des adjuvants du groupe des polyphosphates de sodium, des polycarboxylates de sodium, des silicates de sodium, des acides phosphoniques et de leurs sels et du sulfate de magnésium.

13. Persel de métal alcalin particulaire enrobé selon l'une des revendications précédentes, caractérisé en ce que la quantité du matériau d'enrobage appliqué vaut au moins 1 % en poids, de préférence 2 à 10 % en poids, en particulier 3 à 6 % en poids, par rapport au poids des particules de persels de métaux alcalins enrobées.

14. Persel de métal alcalin particulaire enrobé selon l'une des revendications précédentes, caractérisé en ce que le persel de métal alcalin est le percarbonate de sodium.

15. Utilisation d'acide lactobionique, de sels d'acide lactobionique et/ou de dérivés d'acide lactobionique à titre de matériau d'habillage pour l'enrobage de persels de métaux alcalins, de préférence pour l'enrobage de percarbonate de sodium.

16. Utilisation selon la revendication 15, caractérisée en ce qu'on utilise l'acide lactobionique et/ou le sel d'acide lactobionique en combinaison avec, de préférence en mélange avec le matériau d'habillage supplémentaire d'acide borique et/ou de sel d'acide borique, pour l'enrobage de persels de métaux alcalins, de préférence pour l'enrobage de percarbonate de sodium.

17. Utilisation selon la revendication 15, caractérisée en ce qu'on utilise l'acide lactobionique, le sel d'acide lactobionique et/ou le dérivé d'acide lactobionique en combinaison avec, de préférence en mélange avec un mélange de sels minéraux inorganiques constitué de sulfate de métal alcalin et de chlorure de métal alcalin à titre de matériau d'habillage supplémentaire.

18. Procédé de préparation de persels de métaux alcalins particulaires enrobés, en particulier du groupe du peroxocarbonate, du peroxopyrophosphate, du peroxotripolyphosphate et/ou du peroxomonosulfate, caractérisé en ce qu'on traite les particules de persels de métaux alcalins par un agent d'enrobage aqueux, qui contient, en solution ou en suspension, à titre de matériau d'habillage, de l'acide lactobionique, un sel d'acide lactobionique et/ou un dérivé d'acide lactobionique, de même qu'éventuellement aussi des adjuvants courants pour la préparation de persels de métaux alcalins, et en ce qu'on sèche ensuite les particules traitées par l'agent d'enrobage aqueux.

19. Procédé selon la revendication 18, caractérisé en ce que l'agent d'enrobage présente une teneur en matières solides de matériaux d'habillage en solution et/ou en suspension et d'autres adjuvants courants, en tout, d'au moins 25 % en poids, de préférence d'au moins 40 % en poids, en particulier de 40 à 60 % en poids.

20. Procédé selon la revendication 18 ou 19, caractérisé en ce qu'on sèche les particules traitées par l'agent d'enrobage aqueux jusqu'à une teneur résiduelle d'eau de moins de 2 % en poids, de préférence de moins de 1 % en poids, en particulier de moins de 0,6 % en poids.

21. Utilisation de persels de métaux alcalins particulaires enrobés selon l'une des revendications 1 à 14, à titre de composante de blanchiment dans des produits de lavage ou de blanchiment, en particulier dans des produits de lavage compacts ou de blanchiment compacts.